# EUROPÄISCHE PATENTSCHRIFT

(11) **EP 2 570 354 B1**
(45) Veröffentlichungstag und Bekanntmachung des Hinweises auf die Patenterteilung: **16.03.2016**
(21) Anmeldenummer: 11181019.8
(22) Anmeldetag: 13.09.2011
(51) Int. Cl.: B65C 9/42, B65H 43/00, B65H 26/02, G01N 29/11

(54) **Vorrichtung zur Detektion flacher Objekte auf einem Trägermaterial**
Device for detecting flat objects on a carrier material
Dispositif de détection d'objets plats sur un matériau de support

(43) Veröffentlichungstag der Anmeldung: 20.03.2013
(73) Patentinhaber: Microsonic Gesellschaft für Mikroelektronik und Ulltraschalltechnik mbH, 44227 Dortmund (DE)
(72) Erfinder:
(74) Vertreter: Wickord, Wiro

(56) Entgegenhaltungen:
- EP-A1- 2 120 067
- DE-A1- 10 341 436
- DE-A1-102008 009 578

## Beschreibung

Die Erfindung bezieht sich auf eine Vorrichtung zur Detektion von auf einem Trägermaterial befindlichen flachen Objekten mit einem Ultraschall-Sendewandler und einem Ultraschall-Empfangswandler, die ein Messstrecke bilden, wobei das Trägermaterial mit den flachen Objekten in der Messstrecke bewegt wird, und mit einer Auswerteelektronik, die an einem elektrischen Anschluss ein Ausgangssignal über detektierte Objekte auf dem Trägermaterial liefert, wobei über die Auswerteelektronik aus dem Ultraschall-Sendewandler kurze Schallimpulse abgestrahlt werden, die über die Messstrecke nach einer Transmission durch das Trägermaterial mit oder ohne Objekt zum Ultraschall-Empfangswandler gelangen, als Empfangssignal über einen Analog-Digital-Umsetzer in die Auswerteelektronik eingelesen werden und in Abhängigkeit von in einem Auswertefenster eingelesenen Werten das Ausgangssignal gesteuert wird.

Eine derartige Vorrichtung ist aus der EP 2 120 067 bekannt.

In den Herstellprozessen von Papier oder Folie werden diese als Endlosbahn gefertigt und auf eine Rolle aufgewickelt. Kommt es in den Herstellprozessen zu einer Unterbrechung der Materialbahn, wird die neue Materialbahn mit einem so genannten Spleiß an das Ende der Materialbahn angeklebt und das Bahnmaterial wird weiter aufgewickelt. Das Ankleben, auch Spleißen genannt, einer neuen Materialbahn an das Ende der alten Materialbahn erfolgt entweder mit einem doppelseitigen Klebestreifen oder mit einem entsprechend breiten Klebeband. Werden diese Papierrollen oder Folienrollen später weiterverarbeitet, zum Beispiel um aus dem Papier Verpackungen herzustellen, müssen diese Spleiße, die sich irgendwo auf der Materialbahn befinden können, detektiert werden.
Produkte, wie zum Beispiel Zigarettenschachteln oder CDs, werden häufig in eine transparente Folie eingeschlagen. Diese Folien sind dann mit einem so genannten Aufreißfaden ausgestattet, mit dem der Benutzer die Folie leicht von dem Produkt entfernen kann. An einer Verpackungsmaschine, die Produkte mit einer derartigen Folie einschlägt, besteht die Aufgabe, die Anwesenheit und korrekte Position des Aufreißfadens zu überwachen.

Viele Produkte und dessen Verpackungen werden im Herstellungsprozess mit einem Aufkleber oder Etikett versehen. Diese Etiketten befinden sich zunächst auf einem Trägermaterial, welches auf eine Rolle aufgerollt ist. So genannte Etikettiermaschinen oder Etikettierer nehmen die Etiketten vom Trägermaterial ab und bringen diese auf das Produkt oder dessen Verpackung vollautomatisch auf. Für diesen Etikettiervorgang muss die Etikette auf dem Trägermaterial erkannt werden. Hierfür werden Etikettensensoren eingesetzt, die optisch im Durchlichtverfahren oder kapazitiv arbeiten. Die optischen Sensoren im Durchlichtverfahren versagen, wenn die Etiketten transparent oder lichtundurchlässig sind. Kapazitive Etikettensensoren können nicht bei metallisierten Etiketten eingesetzt werden und reagieren sehr empfindlich auf Schwankungen in der Luftfeuchtigkeit.

Eine interessante Alternative sind Etikettensensoren basierend auf Ultraschall. Ultraschall hat den Vorteil, dass dieser farbunabhängig arbeitet und auch bei hochtransparenten, lichtundurchlässigen und auch bei metallisierten Etiketten eingesetzt werden kann.
Den unterschiedlichen Wirkprinzipien gemeinsam ist die verbreitete Gehäusebauform als Gabelsensor. Ein Gabelsensor besteht aus jeweils einem oberen und unteren Schenkel, die in einem definierten Abstand zueinander angeordnet sind. Zwischen den beiden Schenkeln befindet sich ein Spalt, durch den das Trägermaterial mit den Etiketten hindurchgezogen wird. In den Schenkeln befinden sich die Ultraschallwandler und die Auswerteelektronik. Durch diesen Spalt können auch Bahnmaterialen zur Erkennung von Spleißen, bzw. transparente Folien zur Erkennung von Aufreißfäden gezogen werden.
Im Folgenden wird nur von Trägermaterial gesprochen. Mit diesem Merkmal sind auch Bahnmaterial und Folien mit erfasst.

In der Patentschrift EP 1 067 053 B2 wird eine Vorrichtung beschrieben, die mit einem mit ca. 2 - 5 kHz frequenzmodulierten Ultraschallsignal mit einer Grundfrequenz zwischen 200 und 400 kHz das Trägermaterial durchschallt und die Auswerteschaltung während eines Einlernvorgangs auf das Trägermaterial den größten empfangenen Signalwert als Spitzenwert ermittelt und daraus die Schaltschwelle ermittelt. Die Schaltschwelle wird über einen Spannungsteiler aus dem gefundenen Spitzenwert abgeleitet, wobei der über den Spannungsteiler ermittelte Schwellwert bei etwa der Hälfte des gefundenen Spitzenwerts liegen soll. Der so ermittelte Schwellwert wird im laufenden Betrieb herangezogen zur Bewertung, ob es sich um das Trägermaterial oder um eine auf dem Trägermaterial befindliche Etikette handelt. Diese Vorrichtung geht also davon aus, dass ein Trägermaterial immer einen Signalpegel haben wird, der mehr als doppelt so groß ist wie der Signalpegel von der Etikette auf dem Trägermaterial.

Praktische Versuche haben nun gezeigt, dass sehr dünne Etiketten/Spleiße, wenn sie auf einem dicken Trägermaterial geklebt sind, einen nur sehr geringen Signalunterschied zum Trägermaterial aufweisen können. Es wurden sogar Etiketten/Spleiße gefunden, die auf dem Trägermaterial einen höheren Signalpegel lieferten als das Trägermaterial alleine.
Bezogen auf dem Signalpegel des Trägermaterials kann ein Etikett auf dem Trägermaterial Signalwerte liefern, die nur bei 80 % liegen, also nur 20 % unter dem Signalpegel des Trägermaterials.
Zieht man nur den Spitzenwert des Trägermaterials zur Bestimmung des Schwellenwerts heran, kann man Etiketten mit einem sehr geringen Signalunterschied zum Trägermaterial nicht abtasten. Eine Abtastung von Etiketten, die einen höheren Signalpegel liefern als das Trägermaterial alleine, ist mit dieser Vorrichtung gar nicht möglich. Bei einem porösen, sehr schalldurchlässigen Trägermaterial kann der Spitzenwert des Trägermaterials einen extrem hohen Wert annehmen, so dass von diesem Wert gar nicht mehr auf den abgeschwächten Wert einer Etikette geschlossen werden kann. Der Patentschrift ist zu entnehmen, dass es sich bei dem Sendesignal um ein frequenzmoduliertes Dauerstrichsignal handelt. Ein Dauerstrichsignal hat den Nachteil, dass es aufgrund von Mehrfachreflexionen des Schalls zwischen den Schenkeln der Gabel, bzw. zwischen den Schenkeln und dem Trägermaterial zu Überlagerung und Interferenzen des Empfangssignals kommt.

Die Offenlegungsschrift DE 10 2008 023 185 beschreibt Blenden, die jeweils vor dem Sendewandler und Empfangswandler angeordnet werden, um diese Interferenzen und Überlagerungen zu vermeiden. Nachteilig ist, dass zusätzliche Komponenten benötigt werden und hierdurch die Reinigung der Ultraschall-Wandler von Papierstaub oder Abrieb des Träger- bzw. Bahnmaterials deutlich erschwert wird.

Der Erfindung liegt die Aufgabe zu Grunde, mit einer Vorrichtung auch Etiketten detektieren zu können, die nur einen sehr geringen Signalunterschied zwischen Trägermaterial und Trägermaterial mit Etiketten liefern und die Etiketten auch dann noch sicher erkennen kann, wenn diese einen größeren Signalpegel liefern als das Trägermaterial alleine. Dabei sollen nicht nur Etiketten, sondern auch andere flache Objekte wie Spleiße oder Aufreißfäden auf einem Trägermaterial erkannt werden.
Auch sollen Objekte noch sicher erkannt werden können, wenn diese auf einem porösen und schalldurchlässigen Trägermaterial aufgebracht sind.
Weiter soll auf den Einsatz von zusätzlichen Blenden verzichtet werden und gleichzeitig soll die Ansprechzeit für die Erkennung einer Etikette deutlich verkürzt werden.

Die Lösung dieser Aufgaben wird durch eine Vorrichtung mit den Merkmalen des Anspruch1 erreicht. Der zugehörige Einlernvorgang wird nach den Verfahren gemäß Anspruch 8 oder 9 durchgeführt.
Vorteilhafte Ausgestaltungen der Vorrichtung sind in den Unteransprüchen beschrieben.

Die Vorrichtung zur Detektion von flachen Objekten, die sich auf einem Trägermaterial befinden, erfolgt mit einem Ultraschall-Sendewandler und einem Ultraschall-Empfangswandler, die eine Messstrecke bilden. Das Trägermaterial mit den Objekten wird in der Messstrecke bewegt und mit einer Auswerteelektronik bewertet, die an einem elektrischen Anschluss ein Ausgangssignal über detektierte Objekte auf dem Trägermaterial liefert. Dabei werden über die Auswerteelektronik aus dem Ultraschall-Sendewandler Schallimpulse abgestrahlt, die über die Messstrecke nach einer Transmission durch das Trägermaterial mit oder ohne Objekt zum Ultraschall-Empfangswandler gelangen. Diese Empfangssignale werden über einen Analog-Digital-Umsetzer innerhalb eines Auswertefensters in ein Rechenwerk der Auswerteelektronik eingelesen und in Abhängigkeit von in eingelesenen Werten das Ausgangssignal gesteuert.

Die Vorrichtung zeichnet sich dadurch aus, dass die Schallimpulse kurze Pulspakete sind, die in einem ersten Auswertefenster als Einzelmessung bewertet werden und dass während eines Einlernvorgangs aus den eingelesenen Werten der Einzelmessungen aus der Menge der größten Werte der niedrigste Wert A1 und aus der Menge der kleinsten Werte der höchste Wert A2 bestimmt wird und aus diesen Werten ein Diskriminatorwert für die Einzelmessungen bestimmt wird, bei dessen Unter- oder Überschreiten das Ausgangssignal wechselt.
So können bei verschienen Kombinationen von Objekten und Trägermaterial diese sicher auseinandergehalten werden.

Die hier beschriebene Vorrrichtung ist nicht nur für die Detektion von Etiketten nutzbar. Die Objekte können auch Spleiße auf dem Trägermaterial sein. Ebenso sind Aufreißfäden von Verpackungen, etwa Zigarettenschachteln oder CD-Hüllen, durch die Vorrichtung detektierbar.

Die Vorrichtung ist vorteilhaft in einem gabelförmigen Gehäuse mit zwei Schenkeln untergebracht. Dabei befinden sich der Ultraschall-Sendewandler in dem unteren Schenkel und der Ultraschall-Empfangswandler in dem oberen Schenkel. Beide sind unter einem Winkel in die Schenkel eingebaut, so dass sich eine schräggestellte Messtrecke zwischen ihnen ergibt.
Ebenso ist die Auswertelektronik in einem der Schenkel untergebracht. Auch der elektrische Anschluss der Vorrichtung ist am Gehäuse angebracht.

Der für die Bestimmung des Diskriminatorwertes vorgesehene Einlernvorgang kann über einen Steuereingang am elektrischen Anschluss oder einen Taster am Gehäuse ausgelöst werden.

Das Ausgangssignal ist ein digitales Logiksignal, das von einer nachgeordneten Maschinensteuerung ausgewertet werden kann. Durch eine Signalfolge am Steuereingang des elektrischen Anschlusses oder eine Tastendruckkombination am Taster ist das Ausgangssignal auch invertierbar.

Die Vorrichtung wird anhand der Figuren für die Detektion von Etiketten weiter erläutert.
Figur 1 zeigt einen Querschnitt durch das Gehäuse der Vorrichtung.
Figur 2 zeigt das Blockschaltbild der Auswerteelektronik der Vorrichtung.
Figur 3 zeigt das typische Empfangssignal einer einzelnen Messung.
Figur 4 zeigt den Signalverlauf der zeitdiskret aufgenommenen Messwerte bei einem statischen Einlernvorgang.
Figur 5 zeigt den Signalverlauf von zeitdiskret aufgenommenen Messwerten bei einem dynamischen Einlernvorgang.

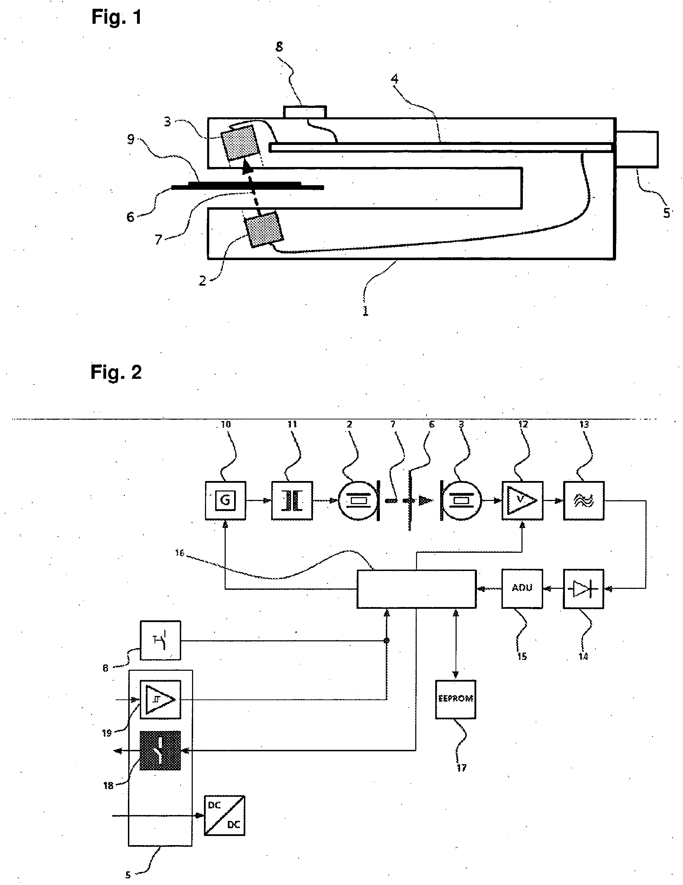

Figur 1 zeigt den Aufbau der erfindungsgemäßen Vorrichtung mit seinem gabelförmigen Gehäuse 1. In dem unteren Schenkel ist der Ultraschall-Sendewandler 2 untergebracht, in dem oberen Schenken der Ultraschall Empfangswandler 3. Die beiden Schenkel sind parallel angeordnet und der Abstand zwischen ihnen bildet den Spalt, durch den das Trägermaterial geführt werden kann. Sende- und Empfangswandler bilden die Messstrecke 7 und sind an die Auswerteelektronik 4 angeschlossen. Ebenfalls an die Auswerteelektronik 4 sind Leuchtmelder und ein Taster 8 angeschlossen. Der Anschluss 5 mit Stecker für das Ausgangssignal und ggf. einem Steuereingang ist wiederum direkt an der Auswerteelektronik 4 angeschlossen. Durch den Spalt, gebildet aus dem oberen und unteren Schenkel des Gehäuses, wird das Trägermaterial 6 mit den Etiketten 9 geführt. Das Trägermaterial mit den Etiketten bewegt sich aus der Projektionsfläche in Richtung des Betrachters. In der Ebene der Projektionsfläche sind der Sende- und der Empfangswandler etwas schräg geneigt. Ein geeigneter Winkel beträgt 13° aus der Flächennormale des Trägermaterials 6.

Der Ultraschall-Sendewandler 2 strahlt zeitdiskret Schallimpulse ab. Diese regen das Trägermaterial zu Schwingungen an. Hierdurch wird auf der gegenüberliegenden Seite eine abgeschwächte Schallwelle abgestrahlt, die vom Ultraschall-Empfangswandler 3 empfangen wird. Die Auswerteelektronik 4 wertet die empfangenen Signale der Messstrecke 7 aus und gibt ein ergebnisabhängiges Ausgangssignal an Stecker 5 aus. Dies kann ein einfaches logisches Signal oder aber auch ein Signal an einer digitalen Schnittstelle sein.

Figur 2 zeigt das Blockschaltbild der Auswerteelektronik mit Sende- und Empfangswandler. Der gesamte Messablauf wird von einem Rechenwerk 16, das z.B. als Mikrocontroller oder Mikroprozessor ausgeführt ist, gesteuert. Das Rechenwerk gibt einen Startimpuls auf den Ultraschall-Generator 10. Dieser erzeugt ein kurzes Schwingungspaket mit der Ultraschall-Frequenz der Ultraschall-Sende- 2 und -Empfangswandler 3. Dieses Schwingungspaket wird über die Leistungsendstufe 11 auf den Ultraschall-Sendewandler 2 gegeben. Die Leistungsendstufe 11 kann aus einem Transformator bestehen, der aus dem Ausgangssignal des Generators eine hohe Spannung erzeugt, oder aus einer Gegentakt-Endstufe, z.B. aufgebaut mit Transistoren. Der Ultraschall-Sendewandler 2 strahlt einen kurzen Schallimpuls ab. Dieser regt das Trägermaterial 6 zu Schwingungen an, so dass auf der gegenüberliegenden Seite des Trägermaterials 6 eine kleine Schallwelle abgestrahlt wird. Diese Schallwelle wird vom Ultraschall-Empfangswandler 3 empfangen und in einem Wechselspannungsverstärker 12 verstärkt.
Der Verstärkungsfaktor des Wechselspannungsverstärkers 12 kann vom Rechenwerk 16 eingestellt werden. Das verstärkte Empfangssignal wird über einen Bandpass 13 geführt, um Rauschen und Störsignale herauszufiltern. Das verstärkte und gefilterte Empfangssignal wird anschließend in einem Gleichrichter 14 gleichgerichtet, wobei der Gleichrichter einen kleiner Glättungskondensator enthält, so dass an dem Ausgang des Gleichrichters die Einhüllende des Empfangssignals ansteht.
Diese Einhüllende wird mit einem schnellen Analog-Digital-Umsetzer 15 digitalisiert und im Rechenwerk 16 eingelesen. Wird als Rechenwerk ein Mikrocontroller mit integriertem Analog-Digital-Umsetzer verwendet, kann auch dieser integrierte Analog-Digital-Umsetzer verwendet werden, sofern dieser schnell genug ist. Bei Bedarf kann zwischen dem Gleichrichter 14 und dem Analog-Digital-Umsetzer 15 noch eine Sample & Hold-Stufe geschaltet werden. Diese hat dann die Aufgabe, den Spannungswert der Einhüllende zwischenzuspeichern, so dass ein langsamer Analog-Digital-Umsetzer den Wert abholen kann.

Das Rechenwerk 16 bewertet die empfangenen Messwerte und steuert entsprechend dem Ergebnis das Ausgangssignal 18 an. Der Ausgang ist in der Regel als ein binäres Schaltelement in Halbleitertechnik, wie zum Beispiel ein pnp-Schaltausgang, ein npn-Schaltausgang oder eine Push-pull-Endstufe, ausgeführt.

Über einen Taster 8 am Gehäuse 1 oder einen Steuereingang 19 am Anschluss 5 kann der Anwender die Vorrichtung auf das abzutastende Trägermaterial 6 mit den spezifischen Etiketten 9 einstellen. Dies ist notwendig, da es sehr vielfältige Trägermaterialien und Etiketten gibt, die sehr unterschiedliche Signalpegel liefern können.

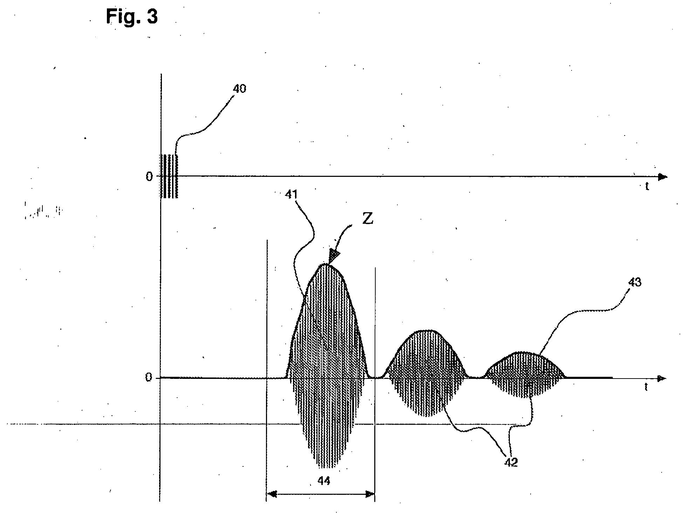

Figur 3 zeigt das Empfangssignal einer einzelnen Messung und die daraus gewonnene Einhüllende 43. Zum Zeitpunkt 0 strahlt der Sendewandler 2 ein Kurzes Sendepulspaket ab. Über die Schalllaufzeit durch die Luft zum Trägermaterial 6 und auf dessen gegenüberliegende Seite vom Trägermaterial zum Ultraschall-Empfangswandler 3 wird das erste direkt empfangene Transmissionssignal 41 im Auswertefenster 44 gezeigt. Dem ersten direkt empfangenen Transmissionssignal 41 folgen weitere Empfangssignale 42. Von Interesse ist ausschließlich das erste direkt empfangene Transmissionssignal 41, da nur dieses Signal die Information über die Signaldämpfung, hervorgerufen durch Trägermaterial 6 und Etiketten 9, enthält.

Da das Rechenwerk zum Zeitpunkt 0 das Abstrahlen des Sendepulspaketes 40 generiert und der Abstand zwischen den beiden Schenkeln, respektive zwischen dem Ultraschall-Sende- 2 und Ultraschall-Empfangswandler 3 bekannt ist, kann das Rechenwerk auf der Zeitachse ein Auswertefenster 44 festlegen, in dem er nur das erste direkt empfange Transmissionssignal 41 empfängt und auswertet. Das Rechenwerk sucht sich im Auswertefenster 44 aus den empfangenen Messwerten den größten Wert heraus und speichert diesen als Zwischenergebnis Z ab. Da die dem ersten direkt empfangen Transmissionssignal 41 folgenden Empfangssignale 42 von dem Rechenwerk nicht mehr berücksichtigt werden, beeinflussen diese durch Mehrfachreflexionen und Überlagerungen entstandenen, unerwünschten Signale die eigentliche Messung nicht.
Mit steigender Ultraschallfrequenz nimmt die Dämpfung in der Luft quadratisch zu. Je höher die gewählte Ultraschallfrequenz ist, umso schneller ist der Schall absorbiert und man kann mit der nächsten Einzelmessung früher starten. Die Ultraschallfrequenz für den Sende- und Empfangswandler wird mit 500 kHz so hoch gewählt, dass Einzelmessungen bereits alle 100 µs möglich sind. Weiter hat eine hohe Ultraschallfrequenz den Vorteil, dass der eigentliche Messfleck auf dem Trägermaterial sehr klein wird. Dank der Kombination der Einzelmessungen mit gepulsten Sendesignalen und einer hohen Ultraschallfrequenz kann auf den Einsatz von Blenden vor den Ultraschallwandlern verzichtet werden. Eine noch höhere Ultraschallfrequenz ist noch vorteilhafter.

Das Rechenwerk führt in sehr kurzen Zeitabständen diese Einzelmessungen durch und ermittelt für jede Einzelmessung das Zwischenergebnis Z. Der zeitliche Abstand zwischen zwei Einzelmessungen kann vom Rechenwerk eingestellt werden und variiert zwischen 100 µs und 2 ms. Bei einem sehr dünnen Träger- oder Bahnmaterial wird nur sehr wenig Schallleistung benötigt. In entsprechend kurzen Zeitabständen können die Einzelmessungen durchgeführt werden. Je schneller die Einzelmessungen durchgeführt werden können, umso schneller kann die Vorrichtung reagieren. Werden jedoch dickere Träger- oder Bahrimaterialien abgetastet, muss unter Umständen die abgestrahlte Schallleistung erhöht werden, damit noch eine Transmission stattfindet. Da dann mehr Leistung auf den Ultraschall-Sendewandler gegeben wird, müssen die Einzelmessungen in einem längeren Zeitabstand durchgeführt werden, um eine Überlastung des Sendewandlers zu vermeiden. Deshalb passt die Vorrichtung die Dauer der Einzelmessungen automatisch der auf den Sendewandler gegebenen Leistung an. Damit wird eine Überlastung des Sendewandlers vermieden.

Da es sehr viele unterschiedliche Trägermaterialien und Etiketten gibt, muss die Vorrichtung auf das abzutastende Material eingestellt werden. Dies geschieht durch einen Einlernvorgang. Dieser Einlernvorgang kann manuell an der Vorrichtung über den Taster 8 ausgelöst werden oder wahlweise extern von der Steuerung über einen Steuereingang 19 am Anschluss 5.

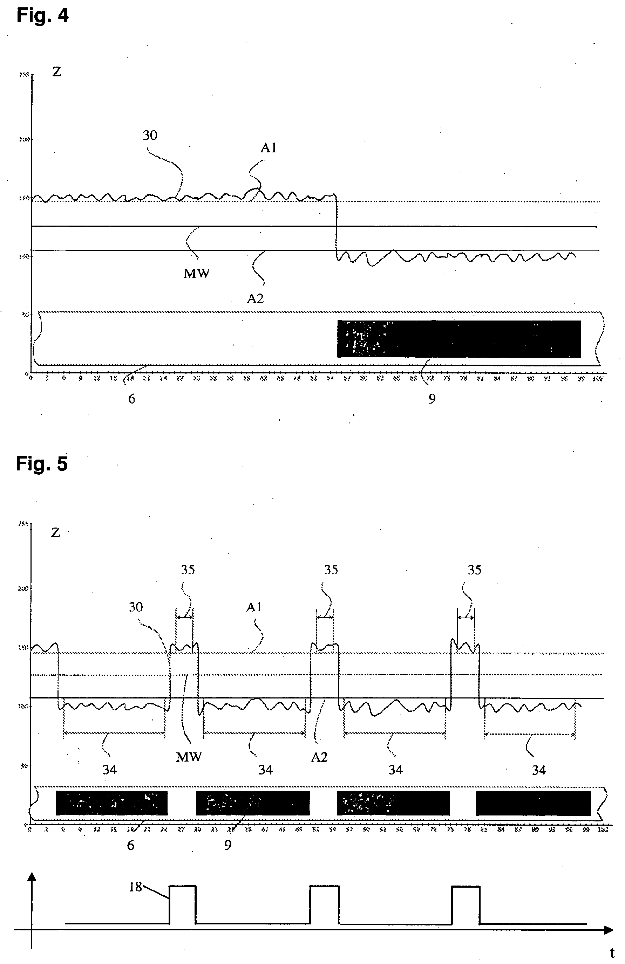

Etiketten und Trägermaterial können wahlweise statisch oder dynamisch eingelernt werden.
Bei dem statischen Einlernvorgang gemäß Figur 4 wird zunächst nur das Trägermaterial 6 in die Gabel eingelegt. Über den Taster 8 oder über einen Impuls am Steuereingang 19 am Stecker 5 wird der statische Einlernvorgang initiiert. Leuchtmelder signalisieren dem Anwender, dass der Einlernvorgang gestartet wurde. Bei einem inhomogenen Trägermaterial sollte der Anwender das Trägermaterial ein wenig in der Gabel hin und her bewegen, so dass die Vorrichtung die unterschiedlichen Signalpegel 30 erfassen kann. Während des Einlernvorgangs des Trägermaterials variiert das Rechenwerk den Verstärkungsfaktor des Verstärkers 12 solange, bis der empfangene Signalpegel im gewünschten Bereich, hier im Beispiel bei ca. 150, liegt. Bei einem sehr "schalldurchlässigen" Trägermaterial kann das Rechenwerk zusätzlich die Länge des abgestrahlten Sendeimpulses verkürzen. Hierzu verkürzt er das Freigabesignal für den Generator 10.
Aus allen Werten der Einzelmessungen für das Trägermaterials (6) werden der kleinste und größte Wert temporär zwischengespeichert.
Mit einem kurzen Druck auf die Taste 8 oder einem kurzen Impuls am Steuereingang 19 am Anschluss 5 wird der Einlernvorgang für das Trägermaterial abgeschlossen. Der Anwender legt anschließend das Trägermaterial mit Etikette in die Gabel ein. Mit einem weiteren Tastendruck auf den Taster 8 oder einem kurzen Impuls am Steuereingang 19 am Anschluss 5 wird der Einlernvorgang für Trägermaterial mit Etikette gestartet. Bei inhomogenen Materialien kann der Anwender wieder Trägermaterial mit Etikette hin und her bewegen, so dass die Vorrichtung die Inhomogenitäten im Signalverlauf 30 erfassen kann. Aus allen Werten der Einzelmessungen für das Trägermaterials mit Objekt 9 werden der kleinste und größte Wert temporär ebenfalls zwischengespeichert.
Ein letzter Tastendruck auf den Taster 8 bzw. ein letzter kurzer Impuls am Steuereingang 19 am Anschluss 5 schließt den statischen Einlernvorgang ab. Falls der kleinste Wert des Trägermaterials größer ist als der größte Wert der Objekte, werden der kleinste Wert A1 des Trägermaterials und der größte Wert A2 der Objekte in das EEPROM 17 übernommen.
Falls der größte Wert des Trägermaterials kleiner ist als der kleinste Wert der Objekte, werden der größte Wert A2 des Trägermaterials und der kleinste Wert A1 der Objekte in das EEPROM 17 übernommen.
Das Rechenwerk ermittelt aus den Werten A1 und A2 den Diskriminatorwert MW und speichert diesen nichtflüchtig im EEPROM 17 ab.

Figur 4 zeigt den Signalverlauf 30 der so zeitdiskret aufgenommenen Zwischenergebnisse Z aus dem Auswertefenster 44 während eines statischen Einlernvorgangs. Unter dem Signalverlauf ist schematisch ein Trägermaterial 6 mit einem sich darauf befindlichen Etikett 9 dargestellt. Bei einem 8-Bit Analog-Digital-Umsetzer mit einem Wertebereich von 0-255 liefert in dem Beispiel das Trägermaterial einen Wert von ca. 150-160 und Etikett mit Trägermaterial Signalpegel im Bereich von 93-107.

In Figur 4 sind zum Signalverlauf 30 zusätzlich eingezeichnet die bei dem statischen Einlernvorgang auf das Trägermaterial und auf die Etiketten ermittelten kleinsten Wert vom Trägermaterial A1 und den größten Wert von den Etiketten A2. Das Rechenwerk ermittelt aus den beiden Werten A1 und A2 den Diskriminatorwert MW = (A1 + A2)/2. Alle Signalwerte > Diskriminatorwert MW werden als Trägermaterial bewertet, wohingegen alle Signalwerte ≤ Diskriminatorwert MW als Etikett bewertet werden.
Der statische Einlernvorgang liefert den optimalen Diskriminatorwert MW auch bei kritischen Materialien, bei denen die gefundenen Werte A1 und A2 sehr nahe beieinander liegen können.

Ist das statische Einlernen für den Anwender nicht praktikabel, kann das Trägermaterial mit den Etiketten auch dynamisch eingelernt werden. Hierzu muss eine Antriebsvorrichtung das Trägermaterial mit einer konstanten Geschwindigkeit durch die Vorrichtung ziehen. Über einen Tastendruck am Taster 8 bzw. über einen Impuls am Steuereingang 19 am Anschluss 5 wird der dynamische Einlernvorgang initiiert. Während des Einlernvorgangs des Trägermaterials mit Etiketten variiert das Rechenwerk den Verstärkungsfaktor des Verstärkers 12 solange, bis die empfangenen Signalpegel für die großen Zwischenwerte Z in den Auswertefenstern (35) im gewünschten Bereich, hier im Beispiel bei ca. 150, liegen. Bei einem sehr "schalldurchlässigen" Trägermaterial kann das Rechenwerk zusätzlich die Länge der abgestrahlten Sendeimpulse verkürzen und die zeitliche Dauer einer Einzelmessung der Leistung entsprechend anpassen. Hierzu verkürzt er das Freigabesignal für den Generator 10.
Im Rechenwerk werden erste Auswertefenster 35 aufgespannt, innerhalb derer der niedrigste Wert A1 des Empfangssignals für das Trägermaterial 6 ermittelt wird, und zweite Auswertefenster 34 aufgespannt, innerhalb derer der höchste Wert des A2 Empfangssignals für das Trägermaterial mit Objekt 9 ermittelt wird, die zur Berechnung des Diskriminatorwertes MW herangezogen werden.
Mit einem weiteren Tastendruck am Taster 8 bzw. über einen Impuls am Steuereingang 19 am Anschluss 5 wird der dynamische Einlernvorgang abgeschlossen.

Figur 5 zeigt den typischen Signalverlauf der zeitdiskret aufgenommenen Zwischenergebnisse Z während eines dynamischen Einlernvorgangs. Unter dem Signalverlauf ist schematisch ein Trägermaterial 6 mit sich darauf befindlichen Etiketten 9 dargestellt. Während des Einlernvorgangs werden die Etiketten mit konstanter Geschwindigkeit durch die Vorrichtung bewegt. Zusätzlich eingezeichnet sind die bei dem dynamischen Einlernvorgang auf das Trägermaterial und auf die Etiketten ermittelten kleinsten Wert vom Trägermaterial A1 und den größten Wert von den Etiketten A2. Das Rechenwerk ermittelt aus den beiden Werten A1 und A2 den Diskriminatorwert MW = (A1 + A2)/2. Alle Signalwerte > Diskriminatorwert MW werden als Trägermaterial bewertet, wohingegen alle Signalwerte ≤ Diskriminatorwert MW als Etikett bewertet werden.

Um während des dynamischen Einlernvorgangs den kleinsten Wert vom Trägermaterial A1 und den größten Wert von Trägermaterial mit Etiketten A2 ermitteln zu können, muss das Rechenwerk in dem zeitlichen Signalverlauf 30 die Auswertefenster 34 zur Ermittlung von A2 und die Auswertefenster 35 zur Ermittlung von A1 auf die zeitdiskret aufgenommenen Zwischenergebnisse Z anwenden. Damit werden die Flankenwechsel von Trägermaterial auf Trägermaterial mit Etikette und umgekehrt ausgeblendet. Hierzu werden die zeitdiskret aufgenommenen Zwischenergebnisse Z im Rechenwerk zwischengespeichert und anschließend von diesem numerisch analysiert.

In Fig. 5 ist weiterhin das generierte Ausgangssignal 18 über der Zeit dargestellt. Es folgt dem Signalverlauf 30 wie er den Diskriminatorwert 30 über- oder unterschreitet.

Über die Länge des ersten Tastendrucks am Taster 8, bzw. über die Länge des ersten Impulses am Steuereingang 19 am Anschluss 5 kann der Mikroprozessor erkennen, ob Trägermaterial und Etiketten statisch oder dynamisch eingelernt werden sollen. Ein dynamisches Einlernen kann zum Beispiel mit einem Tastendruck der Länge 3 s und ein statisches Einlernen mit einem Tastendruck der Länge 6 s initiiert werden.

Gegenüber dem Stand der Technik wird hier nicht nur der Signalwert des Trägermaterials automatisch durch einen Einlernvorgang ermittelt und daraus rückwärts auf den Signalwert für Trägermaterial mit Etiketten geschlossen, sondern vielmehr werden in den Einlernvorgängen die Signalwerte für Trägermaterial und Trägermaterial mit Etiketten getrennt ermittelt und durch eine arithmetische Berechnung der Diskriminatorwert MW daraus abgeleitet.

Für beide Verfahren des Einlernens ist es unerheblich, ob Etiketten mit Trägermaterial einen höheren oder niedrigeren Signalpegel als das Trägermaterial alleine liefern. Liefern Etiketten mit Trägermaterial einen höheren Signalpegel, würde das Ausgangssignal 18 lediglich invertiert ausgegeben werden. Über eine Tastendruckfolge am Taster 8 bzw. über eine Signalfolge am Steuereingang 19 am Anschluss 5 kann die Ausgangscharakteristik des Signalausgangs optional invertiert werden, also zwischen Öffner- und Schließer-Schaltverhalten umgeschaltet werden.

### Bezugszeichenliste

- 1: Gehäuse
- 2: Ultraschall-Sendewandler
- 3: Ultraschall-Empfangswandler
- 4: Auswerteelektronik
- 5: Elektrischer Anschluss, zum Beispiel Stecker
- 6: Trägermaterial mit Etikette
- 7: Messstrecke
- 8: Taster und Leuchtmelder
- 9: Objekt, Etikett
- 10: Generator
- 11: Leistungsendstufe
- 12: Analogverstärker
- 13: Bandpass
- 14: Gleichrichter
- 15: Analog-Digital-Umsetzer
- 16: Rechenwerk
- 17: EEPROM
- 18: Ausgangssignal
- 19: Steuereingang
- 30: Signalverlauf
- 34: Auswertefenster für die Ermittlung von A2
- 35: Auswertefenster für die Ermittlung von A1
- 40: Zeitpunkt Abstrahlen des Sendeimpulses
- 41: Direkt empfangenes Transmissionssignal
- 42: Weitere empfangene Transmissionssignale
- 43: Einhüllende nach Gleichrichtung
- 44: Erstes Auswertefenster bei der Einzelmessung
- A1: kleinster Messwert vom Trägermaterial
- A2: größter Messwert von Etiketten mit Trägermaterial
- MW: Diskriminatorwert
- Z: Zwischenergebnis

## Patentansprüche

1. Vorrichtung zur Detektion von auf einem Trägermaterial (6) befindlichen flachen Objekten (9) mit einem Ultraschall-Sendewandler (2) und einem Ultraschall-Empfangswandler (3), die eine Messstrecke (7) bilden, wobei das Trägermaterial mit den Objekten in der Messstrecke bewegt wird, und mit einer Auswerteelektronik, die an einem elektrischen Anschluss (5) ein Ausgangssignal (18) über detektierte Objekte auf dem Trägermaterial liefert, wobei über die Auswerteelektronik aus dem Ultraschall-Sendewandler (2) Schallimpulse abgestrahlt werden, die über die Messstrecke (7) nach einer Transmission durch das Trägermaterial (6) mit oder ohne Objekt zum Ultraschall-Empfangswandler (3) gelangen, als Empfangssignal während eines Auswertefensters (44) über einen Analog-Digital-Umsetzer (15) in ein Rechenwerk (16) der Auswerteelektronik (4) eingelesen werden und in Abhängigkeit von den eingelesenen Werten das Ausgangssignal (18) gesteuert wird, **dadurch gekennzeichnet, dass**
die Schallimpulse kurze Pulspakete (40) sind, die in einem ersten Auswertefenster (44) als Einzelmessung bewertet werden,
und während eines Einlernvorgangs aus den eingelesenen Werten der Einzelmessungen aus der Menge der größten Werte der niedrigste Wert (A1) und aus der Menge der kleinsten Werte der höchste Wert (A2) bestimmt wird und aus diesen Werten ein Diskriminatorwert (MW) für die Einzelmessungen bestimmt wird, bei dessen Unter- oder Überschreiten das Ausgangssignal (18) wechselt.

2. Vorrichtung nach Anspruch 1, **dadurch gekennzeichnet, dass** die Objekte (9) Etiketten, Spleiße oder Aufreißfäden sind.

3. Vorrichtung nach Anspruch 1, **dadurch gekennzeichnet, dass** der Ultraschall-Sendewandler (2), der Ultraschall-Empfangswandler (3) und die Auswerteelektronik (4) in den Schenkeln eines gabelförmigen Gehäuses untergebracht sind und die Messtrecke (7) dabei schräg gestellt ist.

4. Vorrichtung nach Anspruch 1, **dadurch gekennzeichnet, dass** für das Ausführen des Einlernvorgangs ein Steuereingang (19) am elektrischen Anschluss (5) oder ein Taster (8) am Gehäuse (1) vorgesehen sind.

5. Vorrichtung nach Anspruch 1, **dadurch gekennzeichnet, dass** die Ultraschallwandler (2, 3) eine Ultraschall-Frequenz von ≥ 500 kHz haben.

6. Vorrichtung nach Anspruch 1, **dadurch gekennzeichnet, dass** das Ausgangssignal (18) ein digitales Logiksignal ist.

7. Vorrichtung nach Anspruch 6, **dadurch gekennzeichnet, dass** das Ausgangssignal (18) durch eine Signalfolge am Steuereingang (19) am elektrischen Anschluss (5) oder eine Tastendruckkombination am Taster (8) invertierbar ist

8. Verfahren zum Durchführen eines Einlernvorgangs mit einer Vorrichtung nach Anspruch 1, **dadurch gekennzeichnet, dass** beim statischen Einlernvorgang im Rechenwerk (16)
- aus allen Werten der Einzelmessungen des Trägermaterials (6) der kleinste und größte Wert temporär zwischengespeichert werden,
- aus allen Werten der Einzelmessungen des Trägermaterials mit Objekt (9) der kleinste und größte Wert temporär zwischengespeichert werden,
- falls der kleinste Wert des Trägermaterials größer ist als der größte Wert der Objekte, der kleinste Wert (A1) des Trägermaterials und der größte Wert (A2) der Objekte übernommen wird
- falls der größte Wert des Trägermaterials kleiner ist als der kleinste Wert der Objekte, der größte Wert (A2) des Trägermaterials und der kleinste Wert (A1) der Objekte übernommen wird,
- und aus diesen Werten ein Diskriminatorwert (MW) für das Empfangssignal bestimmt wird, bei dessen Unter- oder Überschreiten das Ausgangssignal (18) wechselt.

9. Verfahren zum Durchführen eines Einlernvorgangs mit einer Vorrichtung nach Anspruch 1, **dadurch gekennzeichnet, dass**
beim dynamischen Einlernvorgang im Rechenwerk erste Auswertefenster (35) aufgespannt werden, innerhalb derer der niedrigste Wert (A1) des Empfangssignals für das Trägermaterial (6) ermittelt wird und zweite Auswertefenster (34) aufgespannt werden, innerhalb derer der höchste Wert des (A2) Empfangssignals für das Trägermaterial mit Objekt (9) ermittelt wird, die zur Berechnung des Diskriminatorwertes (MW) herangezogen werden.

10. Verfahren nach Anspruch 8 oder 9, **dadurch gekennzeichnet, dass** beim Einlernvorgang der Diskriminatorwert (MW) für das Empfangssignal als Mittelwert zwischen dem niedrigsten Wert (A1) und dem höchsten Wert (A2) auf dem Trägermaterial bestimmt wird.

11. Verfahren nach Anspruch 8 oder 9, **dadurch gekennzeichnet, dass** während des Einlernvorgangs die Länge und/oder die Leistung der abgestrahlten Pulspakete (40) in Abhängigkeit von der Dicke des Trägermaterials (6) und der Objekte (9) eingestellt wird.

12. Verfahren nach Anspruch 11, **dadurch gekennzeichnet, dass** während des Einlernvorganges der zeitliche Abstand der Einzelmessungen in Abhängigkeit von der Länge und/oder der Leistung der abgestrahlten Pulspakete (40) zwischen 100 µs und 2 ms eingestellt werden.

## Claims

1. Device for detecting planar objects (9) located on a carrier material (6), comprising an ultrasound transmission transducer (2) and an ultrasound reception transducer (3), which form a measurement path (7), the carrier material with the objects being moved in the measurement path, and comprising evaluation electronics which supply an output signal (18), relating to detected objects on the carrier material, at an electric terminal (5), sound pulses being emitted from the ultrasound transmission transducer (2) by way of the evaluation electronics and reaching the ultrasound reception transducer (3) via the measurement path (7) after being transmitted through the carrier material (6) with or without an object, and being read into an arithmetic unit (16) of the evaluation electronics (4) as a received signal via an analogue-digital converter (15) during an evaluation window (44), and the output signal (18) being controlled as a function of the values which are read in, **characterised in that**
the sound pulses are short pulse packets (40) which are evaluated as an individual measurement in a first evaluation window (44),
and during a learning process the lowest value (A1) out of the set of largest values and the highest value (A2) out of the set of smallest values are determined from the read-in values of the individual measurements, and a discriminator value (MW) for the individual measurements is determined from these values, the output signal (18) changing when said discriminator value is exceeded or undershot.

2. Device according to claim 1, **characterised in that** the objects (9) are labels, splices or pull threads.

3. Device according to claim 1, **characterised in that** the ultrasound transmission transducer (2), the ultrasound reception transducer (3) and the evaluation electronics (4) are accommodated in the legs of a fork-shaped housing and the measurement path (7) is set obliquely.

4. Device according to claim 1, **characterised in that** a control input (19) at the electric terminal (5) or a switch (8) on the housing (1) is provided for currying out the learning process.

5. Device according to claim 1, **characterised in that** the ultrasound converters (2, 3) have an ultrasound frequency of ≥ 500 kHz.

6. Device according to claim 1, **characterised in that** the output signal (18) is a digital logic signal.

7. Device according to claim 6, **characterised in that** the output signal (18) can be inverted by way of a signal sequence at the control input (19) at the electric terminal (5) or a keypress combination at the switch (8).

8. Method for currying out a learning process using a device according to claim 1, **characterised in that**, in the static learning process in the arithmetic unit (16),
- from all values of the individual measurements of the carrier material (6), the smallest and largest value are temporarily buffered,
- from all values of the individual measurement of the carrier material with an object (9), the smallest and largest value are temporarily buffered,
- if the smallest value of the carrier material is greater than the largest value of the objects, the smallest value (A1) of the carrier material and the largest value (A2) of the objects are adopted,
- if the largest value of the carrier material is smaller than the smallest value of the objects, the largest value (A2) of the carrier material and the smallest value (A1) of the objects are adopted,
- and a discriminator value (MW) for the received signal is determined from these values, the output signal (18) changing when said discriminator value is exceeded or undershot.

9. Method for currying out a learning process using a device according to claim 1,
**characterised in that**,
in the dynamic learning process, in the arithmetic unit, first evaluation windows (35) are created within which the lowest value (A1) of the received signal for the carrier material (6) is determined and second evaluation windows (34) are created within which the highest value (A2) of the received signal for the carrier material with an object (9) is determined, and these are used to calculate the discriminator value (MW).

10. Method according to either claim 8 or claim 9, **characterised in that** in the learning process the discriminator value (MW) for the received signal is determined as the average of the lowest value (A1) and the highest value (A2) on the carrier material.

11. Method according to either claim 8 or claim 9, **characterised in that** during the learning process the length and/or the power of the emitted pulse packets (40) is set as a function of the thickness of the carrier material (6) and the objects (9).

12. Method according to claim 11, **characterised in that** during the learning process the time interval between the individual measurements is set between 100 µs and 2 ms as a function of the length and/or power of the emitted pulse packets (40).

## Revendications

1. Dispositif de détection d'objets plats (9) situés sur un support (6) comportant un transducteur émetteur à ultrasons (2) et un transducteur récepteur à ultrasons (3), qui forment un trajet de mesure (7), le support étant déplacé avec les objets dans le trajet de mesure, et comportant une électronique d'évaluation qui fournit au niveau d'un raccordement électrique (5) un signal de sortie (18) sur des objets détectés sur le support, des impulsions sonores étant émises par l'intermédiaire de l'électronique d'évaluation à partir du transducteur émetteur à ultrasons (2), qui atteignent le transducteur récepteur à ultrasons (3) par le trajet de mesure (7) après une transmission à travers le support (6) avec ou sans objet, sont lues dans une unité de calcul (16) de l'électronique d'évaluation (4) comme signal de réception pendant une fenêtre d'analyse (44) par l'intermédiaire d'un convertisseur analogique-numérique (15) et le signal de sortie (18) étant commandé en fonction des valeurs lues,
**caractérisé en ce que**
les impulsions sonores sont des paquets d'impulsions courts (40), qui sont évalués comme une mesure individuelle dans une première fenêtre d'analyse (44), et la valeur la plus faible (A1) est déterminée à partir de la quantité des plus grandes valeurs et la valeur la plus élevée (A2) est déterminée à partir de la quantité des plus petites valeurs pendant un processus d'apprentissage à partir des valeurs lues des mesures individuelles et une valeur discriminante (MW) est déterminée pour les mesures individuelles à partir de ces valeurs, le signal de sortie (18) changeant en cas de dépassement de cette valeur par le haut ou par le bas.

2. Dispositif selon la revendication 1, **caractérisé en ce que** les objets (9) sont des étiquettes, des épissures ou des fils de déchirure.

3. Dispositif selon la revendication 1, **caractérisé en ce que** le transducteur émetteur à ultrasons (2), le transducteur récepteur à ultrasons (3) et l'électronique d'évaluation (4) sont logés dans les branches d'un boîtier en forme de fourche et le trajet de mesure (7) y est disposé obliquement.

4. Dispositif selon la revendication 1, **caractérisé en ce que**, pour exécuter le processus d'apprentissage, une entrée de commande (19) est prévue au niveau du raccordement électrique (5) ou un bouton-poussoir (8) est prévu au niveau du boîtier (1).

5. Dispositif selon la revendication 1, **caractérisé en ce que** les transducteurs à ultrasons (2, 3) ont une fréquence ultrasonore supérieure ou égale à 500 kHz.

6. Dispositif selon la revendication 1, **caractérisé en ce que** le signal de sortie (18) est un signal logique numérique.

7. Dispositif selon la revendication 6, **caractérisé en ce que** le signal de sortie (18) est réversible par une suite de signaux à l'entrée de commande (19) au niveau du raccordement électrique (5) ou par une combinaison de pression de touches sur le bouton-poussoir (8).

8. Procédé de réalisation d'un processus d'apprentissage avec un dispositif selon la revendication 1, **caractérisé en ce que**, lors du processus d'apprentissage statique dans l'unité de calcul (16),
- parmi toutes les valeurs des mesures individuelles du support (6), la plus petite et la plus grande valeur sont temporairement stockées,
- parmi toutes les valeurs des mesures individuelles du support avec objet (9), la plus petite et la plus grande valeur sont temporairement stockées,
- au cas où la plus petite valeur du support est plus grande que la plus grande valeur des objets, la plus petite valeur (A1) du support et la plus grande valeur (A2) des objets est prise en compte,
- au cas où la plus grande valeur du support est plus petite que la plus petite valeur des objets, la plus grande valeur (A2) du support et la plus petite valeur (A1) des objets est prise en compte,
- et une valeur discriminante (MW) est déterminée pour le signal de réception à partir de ces valeurs, le signal de sortie (18) changeant en cas de dépassement de cette valeur par le haut ou par le bas.

9. Procédé de réalisation d'un processus d'apprentissage avec un dispositif selon la revendication 1, **caractérisé en ce que**, lors du processus d'apprentissage dynamique, des premières fenêtres d'analyse (35) sont étirées dans l'unité de calcul, à l'intérieur desquelles la valeur la plus faible (A1) du signal de réception est déterminée pour le support (6) et des secondes fenêtres d'analyse (34) sont étirées, à l'intérieur desquelles la valeur la plus élevée (A2) du signal de réception est déterminée pour le support avec objet (9), qui sont utilisées pour le calcul de la valeur discriminante (MW).

10. Procédé selon la revendication 8 ou 9, **caractérisé en ce que**, lors du processus d'apprentissage, la valeur discriminante (MW) pour le signal de réception est déterminée comme valeur moyenne entre la valeur la plus faible (A1) et la valeur la plus élevée (A2) sur le support.

11. Procédé selon la revendication 8 ou 9, **caractérisé en ce que**, pendant le processus d'apprentissage, la longueur et/ou la puissance des paquets d'impulsions (40) émis est réglée en fonction de l'épaisseur du support (6) et des objets (9).

12. Procédé selon la revendication 11, **caractérisé en ce que**, pendant le processus d'apprentissage, la distance temporelle des mesures individuelles est réglée en fonction de la longueur et/ou de la puissance des paquets d'impulsions (40) émis entre 100 µs et 2 ms.
